(19) Europäisches Patentamt
European Patent Office
Office européen des brevets

(11) **EP 1 679 097 A1**

(12) **EUROPEAN PATENT APPLICATION**

(43) Date of publication:
**12.07.2006 Bulletin 2006/28**

(51) Int Cl.:
*A63B 24/00* (2006.01) *G01C 22/00* (2006.01)

(21) Application number: **05258120.4**

(22) Date of filing: **30.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **06.01.2005 JP 2005001778**

(71) Applicant: **SEIKO INSTRUMENTS INC.**
**Chiba-shi, Chiba (JP)**

(72) Inventors:
• **Tsubata, Keisuke c/o Seiko Instruments Inc.**
**Chiba-shi, Chiba (JP)**
• **Sugai, Yoshinori c/o Seiko Instruments Inc.**
**Chiba-shi, Chiba (JP)**

(74) Representative: **Cloughley, Peter Andrew et al**
**Miller Sturt Kenyon,**
**9 John Street**
**London WC1N 2ES (GB)**

(54) **Exercise strength evaluation device**

(57) To provide an exercise strength estimation device having little possibility of requiring a user for an excessive exercise. An exercise strength estimation device comprises age input means for inputting an age; age designation means for comparing the input age with a lower limit age, to set the lower limit age as an designated age, when the input age is smaller than the lower limit age, and to set the input age as the designated age when not smaller than the lower limit age; target exercise strength input means for inputting a target exercise strength; rest pulse number holding means for holding a rest pulse number; a pulse number sensor for sensing the pulse number; pulse number detecting means for determining a pulse number during the exercise in response to the pulse number sensed; exercise strength operation means for determining the exercise strength during the exercise from the designated age, the rest pulse number and the pulse number during the exercise; exercise strength decision means for deciding whether or not the exercise strength is not less than the target exercise strength; and warning issuing means for issuing a warning in case where the exercise strength is not less than the target exercise strength.

FIG. 2

**Description**

The present invention relates to an exercise strength estimation device for evaluating an exercise strength.

It is known (e.g., "Manual for Preparing Ergotherapy Prescriptions", First Edition, edited by Japan Medical Association, published by Kabushiki Gaisha Nippon Iji Shinposha, p,8, p10 and so on) that the exercise strength is determined by (P-Pr)/(Pmax - Pr). Here: Letter P designates a pulse number; letters Pr a rest pulse number; and letters Pmax the maximum pulse number.

It is also known (e.g., "New Edition Ergotherpay - Theory & Practice", First Edition, Written by Haruo Ikegami, published by Kabushiki Gaisha Asakura Shoten, p164, p178 and so on) that the maximum pulse number Pmax is determined by (220 - Ag) or (210 - α-Ag). Here, letters Ag designate an age, and letter α designates a constant of about 0.8.

It is known (e.g., JP-A-2004-154589 (Paragraph 0020 etc.), JP-A-2004-646 (Paragraph 0055 etc.)) that the aforementioned exercise strength is utilized for exercise strength evaluation in an exercise for health management, rehabilitation or the like and for an exercise supporting device for training.

In the description thus far made, the age Ag has to be specified for fixing the maximum pulse number Pmax. However, the aforementioned relation between the maximum pulse number Pmax and the age Ag has been verified within a certain age range (e.g., about twenty years to about sixty years). Therefore, the range may not be proper outside of the age range.

If, therefore, the maximum pulse number is determined by applying the age, which is inputted by a user having an age Ag less than twenty years, as it is, the maximum pulse number may become so excessive that an exercise strength S is underestimated to require the user for a harder exercise than expected, thereby to invite dangers.

The invention has been conceived in view of the points thus far described, and has an object to provide an exercise strength estimation device which has little possibility of requiring the user for the excessive exercise.

In order to achieve the aforementioned object, an exercise strength estimation device according to the invention comprises: age input means for inputting the age of a user; age designation means for comparing the age inputted from the age input means with a lower limit age, to set the lower limit age as an designated age, when the input age is smaller than the lower limit age, and to set the input age as the designated age when the input age is not smaller than the lower limit age; target exercise strength input means for inputting a target exercise strength; rest pulse number holding means for holding the pulse number of the user per unit time at a rest time as a rest pulse number; a pulse number sensor for sensing the pulse number at the time while the user is exercising; pulse number detecting means for determining the pulse number per unit time, while the user is exercising, in response to the pulse number sensed by the pulse number sensor; exercise strength operation means for determining the exercise strength while the user is exercising, on the basis of the designated age designated by the age designating means, the rest pulse number held in the rest pulse number holding means, and the pulse number detected by the pulse number detecting means; exercise strength decision means for deciding whether or not the exercise strength determined by the exercise strength operation means is not less than the target exercise strength; and warning issuing means for issuing a warning in case the exercise strength decision means has decided that the exercise strength is not less than the target exercise strength.

The exercise strength estimation device of the invention is provided with "the warning issuing means for issuing the warning in case the exercise strength decision means has decided that the exercise strength is not less than the target exercise strength". As a result, the exercise can be stopped when it reaches the target exercise strength, so that the exercise can be practiced moderate for the health management, the fat prevention,therehabilitationandso on. The exercise strength estimation device of the invention is provided with not only "the exercise strength operation means for determining the exercise strength while the user is exercising, on the basis of the designated age designated by the age designating means, the rest pulse number held in the rest pulse number holding means, and the pulse number detected by the pulse number detecting means", but also "the age designation means for comparing the age inputted from the age input means with a lower limit age, to set the lower limit age as an designated age, when the input age is smaller than the lower limit age, and to set the input age as the designated age when the input age is not smaller than the lower limit age". Even in case, therefore, the age of the user is outside the range in which the correlation to the pulse number has been verified, the device has little possibility of requiring the user for the excessive exercise so that it enables the user to exercise in the state of a high safety. The exercise strength S is determined by:

$$S = (P - Pr)/(Pmax - Pr) \qquad \text{Formula (1).}$$

Here, letter P designates the pulse number; letters Pr the rest pulse number; and letters Pmax the maximum pulse number.

Here, the maximum pulse number Pmax is typically determined by:

$$Pmax = 220 - Ag \qquad\qquad \text{Formula (2-1).}$$

Here, letters Ag designate the age of the user. However, the maximum pulse number Pmax may be alternatively (in the case of a person having an exercising habit, for example) determined by:

$$Pmax = 210 - \alpha \cdot Ag \qquad\qquad \text{Formula (2-2).}$$

The exercise strength S is used for deciding whether or not the exercise corresponds to an aerobic one (S = about 0.4 to 0.85) and whether the aerobic exercise is suited for a fat burning one (S = about 0.4 to 0.65) or for a training one (S = about 0.65 to 0.85).

It is preferred that the target exercise strength St is selected (or corrected) with a different value in dependence upon the exercise habit, the health state (in disease or not) and the high oldness of the user. The target exercise strength is preferably set low for the person having no exercise habit, the person having a problem in the health or the very old person.

In the exercise strength estimation device of the invention, the rest pulse number may either be an input value separately measured by the user or be measured at a rest time by the pulsation sensor of the exercise strength estimation device. In the latter case, the rest pulse number holding means is configured to hold the pulse number of the user detected at the rest time by the pulse number sensor, as the rest pulse number.

The exercise strength evaluation device of the invention may further comprise a walk sensor for detecting a walk, and step number counting means for counting the step number detected by the walk sensor. In this case, the exercise strength at the walking time can be evaluated to evaluate the walking strength as the exercise.

Moreover, the exercise strength evaluation device of the invention may further comprise a watch function. In this case, the watch can also be used for an exercise of a desired strength within a desired time duration.

The exercise strength evaluation device of the invention is typically worn like a wrist watch on a wrist. In this case, the evaluation device can measure the pulses while being worn at all times, so that the user can exercise, every time of the intention, while evaluating the exercise strength.

Embodiments of the present invention will now be described by way of further example only and with reference to the accompanying drawings, in which:-

Fig. 1 is a block diagram of a hardware configuration of a wrist-worn type exercise strength estimation device having a watch function and a step number counting function according to one preferred embodiment of the invention;
Fig. 2 is a functional block diagram of the exercise strength estimation device of Fig. 1;
Fig. 3 is a flow chart showing the operations or actions of the exercise strength estimation device of Fig. 1; and
Fig. 4 is an explanatory view of the exterior of the exercise strength estimation device of Fig. 1.

Next, one preferred mode of embodiment of the invention will be described in connection with its preferred embodiment with reference to the accompanying drawings.

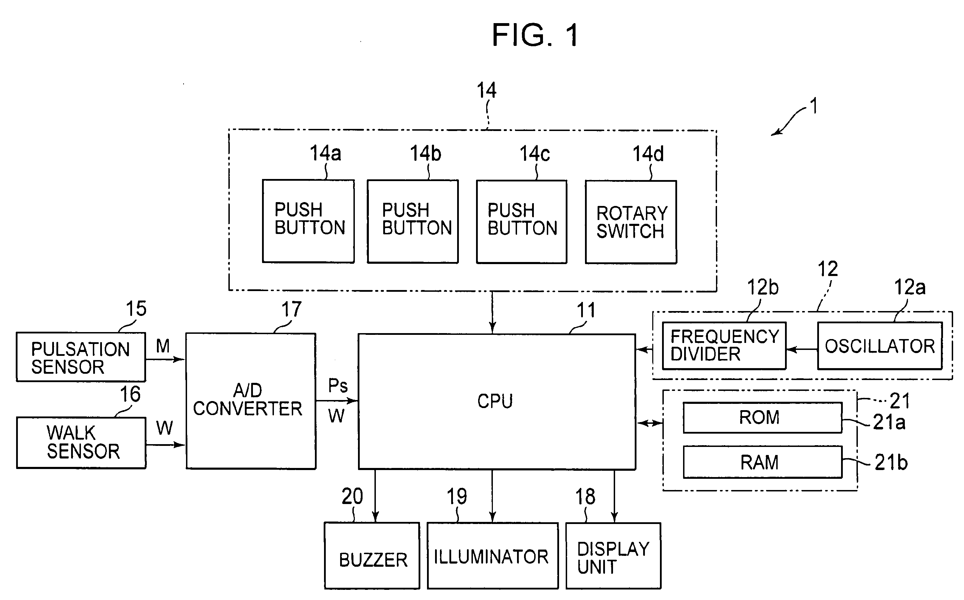

Fig. 1 to Fig. 4 show a wrist-worn type exercise strength evaluation device having a watch function and a step number counting function according to one preferred embodiment of the invention.

Fig. 1 is a block diagram showing a hardware configuration of an exercise strength evaluation device 1 having the watch function and the step number counting function according to a first preferred embodiment of the invention. In Fig. 1, the exercise strength evaluation device 1 comprises: a central processing unit (CPU) 11; a clock signal generation unit 12 including a quartz oscillator 12a for issuing a signal of a predetermined frequency, and a frequency divider 12b for dividing the clock pulses coming from the oscillator 12a, at a predetermined division ratio to issue a clock signal (a timing reference signal) T; an input unit 14 composed of three push button switches 14a, 14b and 14c and a rotary switch 14d; a pulsation sensor 15 for detecting the pulsation of a user to issue a pulsation signal M; a walk sensor 16 for detecting the walk of the user to issue a signal (a walk signal) W corresponding to that walk; an A/D converter 17 for A/D-converting the signals M and W from the sensors 15 and 16; a display unit 18 such as a liquid-crystal display unit for displaying the pulse number, the step number, the time and so on; an illuminator 19 for acting as a portion of the back light of the display of the display unit 18 to color the background of the display; a buzzer 20 for issuing a warning in a specific case; a read-only memory (ROM) 21a stored in advance with a program or the like to be executed by the CPU 11; and an erasable random-access memory (RAM) 21b for providing a work area of the program and for storing the pulse number (the heartbeat number) data, the step number data, a set value and so on. The ROM 21a and the RAM 21b configure a storage unit 21 for the CPU 11.

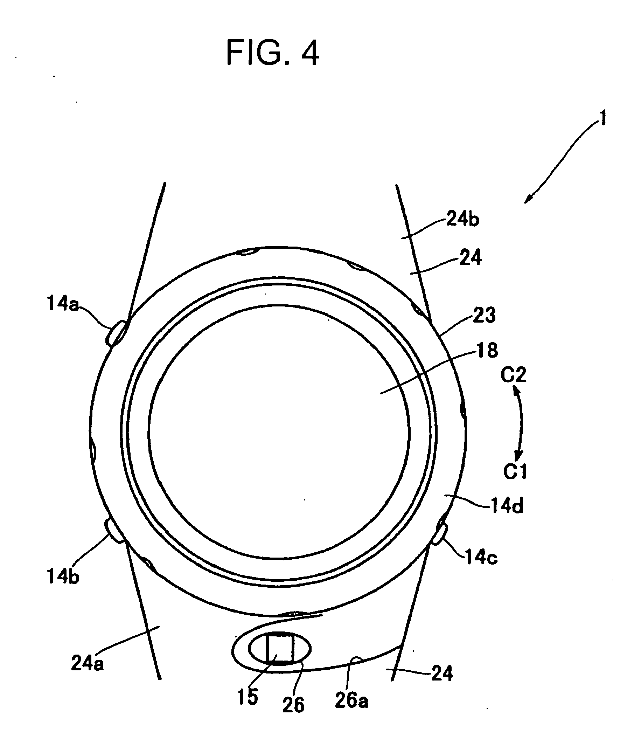

Here, this exercise strength evaluation device 1 having the watch function and the step number counting function is configured, as shown in Fig. 4, for example, into such a wrist watch provided with a case 23 having the display unit 18 positioned at the center of its opening, and a band 24. The rotary switch 14d in the shape of an operation ring can be rotated in directions C1 and C2 with respect to the body of the case 23, and the lefthand upper, lefthand lower and righthand lower push button switches 14a, 14b and 14c of the push button shape are slightly protruded from the circumferential wall of the body of the case 23. The kinds, number and roles of the switch 14 can be modified into arbitrary modes different from those of this embodiment.

The pulsation sensor 15 is buried in one 24a of this side of two band portions 24a and 24b composing the band 24. In the band portion 24a, a peripheral portion 26a of a window 26 of the pulsation sensor 15 is so recessed as to position of a finger to be lightly placed at the time of measuring the pulses. The pulsation sensor 15 may be an optical type sensing the pulses with the absorption or reflection of a light, a piezoelectric type for sensing a pressure fluctuation, an ultrasonic type for utilizing the reflection of ultrasonic waves for the sensing, or any type. On the other hand, the walk sensor 16 may be a pendulum type, a ball type, an acceleration sensing type or any type.

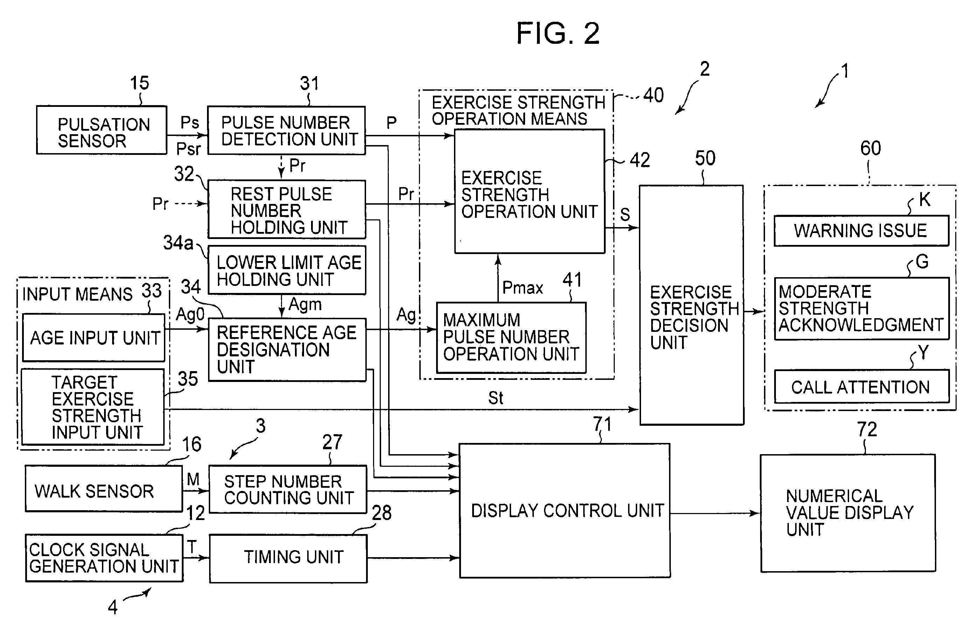

Fig. 2 is a functional block diagram of the exercise strength evaluation device 1 with the watch function and the step number counting function, as configured of the hardware shown in Fig. 1.

As viewed in the functional block diagram or function-related diagram, the exercise strength evaluation device 1 comprises an exercise strength evaluating function unit 2, a step number counting function unit 3 and a watch function unit 4. The major portion (excepting the switch 14, the pulsation sensor 15, the illuminator 19 and a notice portion such as the buzzer 20) of the exercise strength evaluating function unit 2 includes the CPU 11 and a corresponding program stored in the ROM 21a and adapted to be executed by the CPU 11. The major portion (excepting the switch 14, the walk sensor 16 and the display unit 18) of the step number counting function unit 3 includes the CPU 11, and a corresponding program stored in the ROM 21a and adapted to be executed by the CPU 11. The major portion (excepting the switch 14, the clock signal generation unit 12 and the display unit 18) of the watch function unit 4 includes the CPU 11, and a corresponding program stored in the ROM 21a and adapted to be executed by the CPU 11. The step number counting function unit 3 and the watch function unit 4 per se are well known in the prior art. Hence, the following description is directed mainly to the exercise strength evaluating function unit 2.

The exercise strength evaluating function unit 2 includes a heart rate detection unit 31 for detecting a pulse number P by receiving an A/D-converted pulse signal Ps from the pulsation sensor 15, and a rest heart rate holding unit 32 for holding a pulse number Pr at a rest time. As shown by the broken lines in Fig. 2, the rest heart rate holding unit 32 may hold either the rest pulse number data Pr directly inputted from input means or the input unit 14, or the pulse number Pr which has been detected by the heart rate detection unit 31 on the basis of a pulse signal Psr directly sensed at a rest time by the pulsation sensor 15.

The exercise strength evaluating function unit 2 further includes an age input unit 33 and a reference age designation unit 34. The age input unit 33 includes the switch 14 for inputting the age data Ag0 of the user in case the device 1 is in a data input mode and in an age input state. Typically, the device 1 is configured to input the genuine, the weight and so on, considering the functions of a pedometer or another. However, here is basically described only the inputting and processing of data having direct relations to the exercise strength evaluations.

The reference age designation unit 34 discriminates whether or not the age Ag0 inputted from the age input unit 33 is smaller than a predetermined lower limit age Agm held in a lower limit age holding unit 34a. The reference age designation unit 34 sets the lower limit age Agm to a designated age Ag = Agm, when the input age Ag0 is smaller than the lower limit age Agm (i.e., Ag0 < Agm), and sets the input Ag0 to the designated age Ag = Ag0, when the input age Ag0 is not less than the lower limit age Agm. The lower limit age holding unit 34a is typically stored, as a portion of the parameter to be used in the program stored in the ROM 21a, in the ROM 21a, but may be changed, if desired, in its setting. The RAM 21b may be used as well, or instead.

The exercise strength evaluating function unit 2 further includes a target exercise strength input unit 35 for inputting a target exercise strength St. The target exercise strength input unit 35 is composed of the switch 14 for inputting the target exercise strength data St in case the device 1 is in the data input mode and in the age input state. As this target exercise strength St, there is selected a value, which is suitably changed with reference to the object of an exercise to be made by the user and in accordance with the physical state or the youth/oldness (whether relatively young or old) of the user.

Specifically, this target exercise strength St is basically selected from values within a range of about 0.4 to 0.85 in case the user is to practice an aerobic exercise, for example. As well known in the field of ergotherapy, more specifically, a value within a range of about 0.4 to 0.65 is selected when the user is to practice the aerobic exercise with a view to burning the body fat. A value within a range of about 0.65 to 0.85 is selected when the aerobic exercise is intended to train (or hardening) the body. As well known in the field of ergotherapy, a higher value within the range is selected, when a harder exercise of the ergotherapy is to be practiced, but a lower value within the range is selected when a softer exercise is to be practiced. With reference to the values thus selected, a value changed slightly higher is selected, in case the user has an excellent body condition, but a value changed slightly lower is selected in case the user has more or less problems in body condition. Moreover, the youth/oldness degree of the user is added to the reference value thus selected. Specifically, in case the use is relatively old, a relatively low value is finally selected according to the age of the user. In case the user is adult and relatively young, a relatively high value is selected. The consideration into those factors at the time of setting the target exercise strength value St is well known in the field of ergotherapy, and the value setting may follow the disclosure (e.g., "New Edition Ergotherpay - Theory & Practice", First Edition, Written by Haruo Ikegami, published by Kabushiki Gaisha Asakura Shoten, p164, p178 and so on). Moreover, the consideration into and the order of the factors thus far described can be suitably modified according to the situations of the user. Since the youth/oldness of the user is considered at the time of calculating the maximum pulse number (Pmax) to be described in the following, for example, it may be ignored at the time of selecting the value of the target exercise strength St. In the following, the target exercise strength, which is finally determined and inputted by the input unit 3, is designated by St.

The exercise strength estimating function unit 2 further includes exercise strength operation means 40. This exercise strength operation means 40 includes a maximum pulse number operation unit 41 and an exercise strength operation unit 42.

The maximum pulse number operation unit 41 determines the maximum pulse number Pmax on the basis of the designated age data Ag given from the reference age designation unit 34. This maximum pulse number Pmax may be determined by the aforementioned formula (2-1) or (2-2) or by another operation formula. Here, $\alpha$ = about 0.8, in the case using the formula (2-2).

The exercise strength operation unit 42 determines an exercise strength S in real time by the aforementioned formula (1) on the basis of the P detected during the exercise by the pulse number detection unit 31, the rest pulse number Pr held in the rest pulse number holding unit 32, and the maximum pulse number Pmax determined by the maximum pulse number P operation unit 41.

The exercise strength evaluating function unit 2 further includes exercise strength decision means or an exercise strength decision unit 50. The exercise strength decision unit 50 compares the exercise strength S, which has been determined by the exercise strength operation unit 42 while the user is exercising, with the target exercise strength St, and issues a warning K from an evaluation result notification unit 60, when the prevailing exercise strength S is higher than the target exercise strength St. Here, the evaluation result notification unit 60 is composed of the illuminator 19 and the buzzer 20. The warning K is caused by changing the illuminator 19 to form the backlight of the liquid-crystal display unit 18 into a red color and by generating a warning sound by the action of the buzzer 20, so that it advises the user to stop or weaken the exercise.

The exercise strength decision unit 50 issues a signal Y calling the attention from the evaluation result notification unit 60, in case the prevailing exercise strength S is far lower than the target exercise strength St. The attention calling signal Y of the evaluation result notification unit 60 is exemplified by a green flash of the illuminator 19 composing the backlight of the liquid-crystal display unit 18, and notifies the user that the practice should be further continued and that the exercise strength should be enhanced. This signal Y may not be issued before a predetermined time period has elapsed after the exercise start, or may also be issued just after the exercise start. It is typically decided from the magnitude of S/St that the value S is far lower than the value St. This decision may also be made in view of the magnitude of $\Delta S = S - St$.

In case, on the other hand, the prevailing exercise strength S is not higher than the target exercise strength St but close to the target exercise strength, the exercise strength decision unit 50 issues such a signal G from the evaluation result notification unit 60 as indicates that the exercise is moderate. The moderate exercise notification signal G of the evaluation result notification unit 60 comes from the fact that the illuminator 19 composing the backlight of the liquid-crystal display unit 18 keeps on the lighting state in the green color.

Here, the walk signal W, as sensed by the walk sensor 16, is counted by a step number counting unit 27 and can be displayed under the control of a display control unit 71 in a display area (a numerical value display unit) 72 for numerical values in the liquid-crystal display unit 18. On the other hand, the clock signal T from the clock signal generation unit 12 is counted by a timing unit 28 and can be displayed as time information by the numerical value display unit 72 under the control of the display control unit 71.

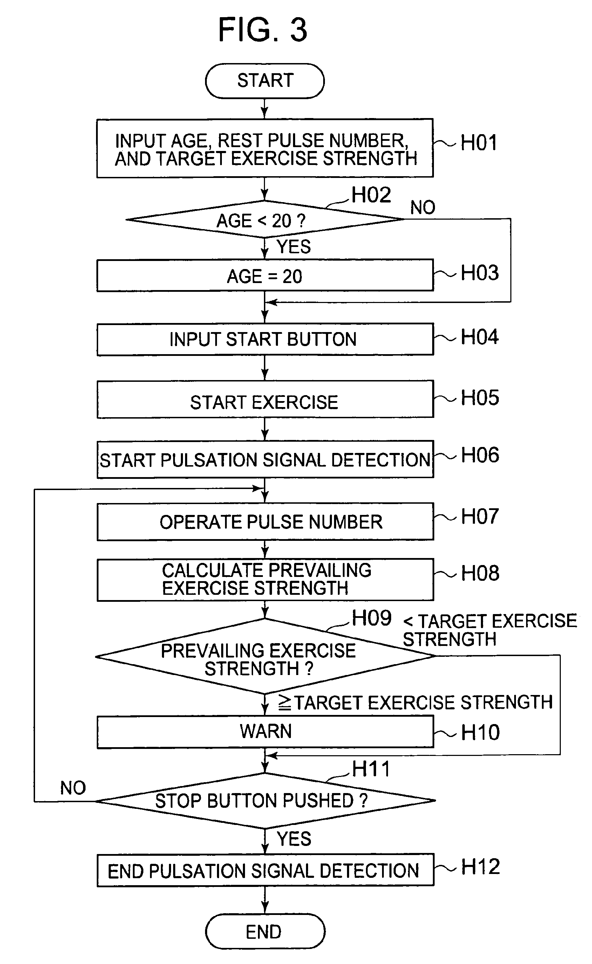

Next, the actions of the exercise strength estimating function unit 2 of the exercise strength estimation device 1 thus configured are described mainly with reference to the flow chart of Fig. 3.

First of all, the age Ag0, the rest pulse number Pr and the target exercise strength St are inputted at Step H01.

For these actions, the wrist-worn type exercise strength estimation device 1 having the watch function and the step number counting function, which has been in the time display mode and used as the wrist water, is switched, for example, to a personal data input/display mode (although not shown). This mode switching is done either by turning the rotary switch 14d a predetermined angle or more or a predetermined number of times in the direction C1 or C2, or by holding the same in the turned state of a predetermined angle or more for a predetermined time period. Here, what mode the device 1 is held in is discriminably displayed with pictures, symbols or letters at identical or different positions on the screen of the liquid-crystal display unit 18. Here, the target exercise can naturally contain a walking.

When the device 1 set in the personal data input/display mode, the push button switch 14a is continuously pushed for a predetermined time period or longer (e. g. , 2 seconds or more). As a result, the device 1 comes into a personal data input accepting state of personal data input/display modes so that the inputted personal data can be corrected (or the initial state can be newly inputted). The changeable data portion is displayed by a flashing, for example. In case where the age Ag0 is selected as the input-enabled data kind, the push button switch 14c is pushed. Each time the push button switch 14c is pushed, either inputs of different kinds or correctable data are sequentially displayed. Therefore, the switch 14c is then pushed to display the age Ag0 in an input-enabled or correctable state. The selection (or input) of the numerical value is made by turning the rotary switch 14d either in the direction C1 to increase the numerical value by "1" or in the direction C2 to decrease the numerical value by "1". When the inputting of the age Ag0 is completed, the rest pulse number Pr and the target exercise strength St are sequentially selected with the switch 14c, and a predetermined numerical value is input/set with the switch 14d. When all the data are completely inputted, the switch 14a is pushed again to fix the various data with the input value or the corrected value.

Here, the rotary switch 14d can change, when turned in the direction C1 or C2, not only the time display mode and the personal data input display mode but also a step number counting display mode, a daily record display mode or a selected record display mode.

The roles of the various switches 14a, 14b, 14c and 14d thus far described are specified in relation to the inputs and the display control program, and may be replaced, if desired, by any means such as other switches or keys.

When the age data Ag0 is fixed, it is decided (at Step H02) by the reference age designation unit 34 of the exercise strength estimating function unit 2 of the device 1 whether or not the data Ag0 is less than the lower limit age Agm = 20, for example. In case less than 20 (AgO < 0), the lower limit age Agm = 20 in place of the age (the input age) Ag0 inputted by the user is set as the designated age Ag (at Step H03). In short, Ag = Agm = 20. In case, on the other hand, the user age Ag0 is not less than the lower age Agm = 20, the user age Ag0 is set, as it is, as the designated age Ag (Ag = AgO) (at the branch No of Step H02).

Next, a start instruction is made (at Step H04) to start the evaluation of the exercise strength S. In the case of this device 1, the start instruction is done by pushing the push button switch 14b while the device 1 being worn like the wrist watch on the lefthand wrist.

Next, the user starts the exercise (at Step H05). In the walking case, the counting of the step number is progressed by the pedometer. In place of the exercise (of Step H05) after the start instruction (at Step H04), the exercise may be started at a desired timing, and then start instruction may be made after lapse of a desired period.

Next, the sensing of the pulsation signal M by the pulsation sensor 15 is started (at Step H06) by placing the surface (on the palm side) of the thumb of the right hand lightly on the window 26 of the pulsation sensor 15 of the band part 24a.

The pulsation signal M from the pulsation sensor 15 is detected as the pulse number by the pulse number detection unit 31 so that the heartbeat number of the pulse number P is counted (at Step H07).

The exercise strength operation means 40 receives the pulse number P from the pulse number detection unit 31 in addition to the rest pulse number Pr from the rest pulse number holding unit 32 and the designated age Ag from the reference age designation unit 34, and determines the exercise strength S (at Step H08) on the basis of the formula (2-1) and the formula (1).

Next, it is checked (at Step H09) by the exercise strength decision unit 50 whether or not the exercise strength S has reached the target exercise strength St.

In the case of S ≥ St, the target exercise strength St has been reached so that the warning K is issued (at Step H10). The detection of a brain wave signal is ended (at Step H12) by pushing the stop button (e.g., the push button switch 14b) (at Step H11) to weaken or stop the exercise. In case the detection of the pulsation signal is stopped, the rotary switch 14d is turned to return the display to the time display mode, for example.

Here, in case the warning K is issued from the evaluation result notification unit 60, the illuminator 19 to form the backlight of the liquid-crystal display unit 18 is changed into the red color, and the buzzer 20 is activated to generate the warning sound. At this time, the letter display unit 72 of the liquid-crystal display unit 18 displays the prevailing pulse number P and an indication to stop or weaken the exercise, such as "PACE DOWN".

In the case of S < St, on the other hand, the target exercise strength St has not been reached yet, it is simply detected whether the stop button has been pushed. As a result, the routine passes with No through Step H11 and comes back to Step H07 or H06.

When the prevailing exercise strength S is far lower in this case than the target exercise strength St, the illuminator 19 forming the backlight of the liquid-crystal display unit 18 is flashed in the green color as the attention calling signal Y from the evaluation result notification unit 60. Moreover, the letter display unit 72 of the liquid-crystal display unit 18 displays the prevailing pulse number P and an indication to strengthen the exercise, such as "PACE UP".

When, on the other hand, the prevailing exercise strength S is lower than the target exercise strength St and close to the target strength St, so that the illuminator 19 forming the backlight of the liquid-crystal display unit 18 is lighted green in a constant intensity issued from the evaluation result notification unit 60 as the signal G indicating the ideal target aerobic exercise state. Moreover, the letter display unit 72 of the liquid-crystal display unit 18 displays the prevailing pulse number P and an indication to keep the state, such as "KEEP".

Here, in case the measurement of the pulse number is once stopped to continue the exercise, the exercise may be unchangedly continued, and the pulse signal M may be sensed (at Step H06) again either after lapse of a desired period or after an exercise of a desired quantity. Alternatively, the device 1 may be once returned to the time display mode, and the pulse signal M may be sensed again (at Step H06), either after lapse of a desired period or after an exercise of a desired quantity.

In the exercise strength estimation device 1 thus configured and activated, the user age Ag0 is inputted as 16, i.e., Ag0 = 16, in case the user is not an adult of less than twenty years but sixteen years old. Even in this case, the reference age designation unit 34 decides it at Steps H02 and H03 that the user age is lower in the lower limit age holding unit 34a than the lower limit age Agm = 20 of the verified application range of the formula (1), the formula (2-1) or the formula (2-2), and sets Ag = Agm = 20 as the designated age without applying the unexamined formula (1) and the formula (2-1) or the formula (2-2) simply. (The setting of Ag = Agm = 18 is naturally made, if the lower limit age verified as the reliable data is obtained up to eighteen years.)

As a result, the exercise strength S is determined from the formula (1) and the formula (2-1), as follows:

$$S = (P - Pr)/(Pmax - Pr)$$

$$= (P - Pr)/\{(220 - Agm) - Pr\}$$

$$= (P - Pr)/\{(220 - 20) - Pr\}$$

$$\approx (P - Pr/(200 - Pr)$$

This exercise strength S is always larger than an unexamined exercise strength Sx simply determined still in the unexamined state as Ag = Ag0, as follows, so that S > Sx:

$$Sx = (P - Pr)/\{(220 - 16) - Pr\}$$

$$= (P - Pr)/(204 - Pr).$$

In this exercise strength estimation device 1, therefore, the examined exercise strength S is utilized to provide a chance to utilize the device 1 relatively safely even for the user of the unexamined range, while avoiding any requirement of the user for an excessively strong exercise.

More specifically, in case the user of sixteen years having a rest pulse number Pr = 60 exercises under condition of the target exercise strength St = 50 %, i.e., 0.5, the relation of Ag = Ag0 = 16 is applied, as in the prior art, to the formula (1-1), i.e., P = S·(Pmax - Pr) + Pr, as corresponding to the formula (1) and to the formula (2-1). Then, the target exercise strength St = 0 is not reached before the pulse number P (per minute) becomes 132. In this exercise evaluation device 1, on the contrary, when the pulse number P (per minute) becomes 130, the target exercise strength St = 0.5 is reached, so that the decision on the reach of the target exercise strength is made earlier, making it possible to reduce the possibility that the user is required for the excessive exercise.

In case the exercise strength is thus evaluated outside of the verified range, it is arbitrary to inform the user of the evaluation in the changed age by means of letters, drawings or flashing displays on the screen of the display unit 18.

In case the user is old, too, a relatively safe use is retained, because a function of S = S(Ag) decreases with the increase in the age Ag, although unexamined yet, so that the old user has such a higher exercise strength at the actual age Ag0 than that regulated by the upper limit value of the examined range as deviated to the safe side. In the case of the old user, it is naturally expected to set a rather small value while considering the age as the target exercise strength St, as described above.

**Claims**

1. An exercise strength estimation device comprising:

age input means for inputting the age of a user;

age designation means for comparing the age inputted from said age input means with a lower limit age, to set said lower limit age as an designated age when the input age is smaller than said lower limit age, and to set the input age as the designated age when the input age is not smaller than said lower limit age;

target exercise strength input means for inputting a target exercise strength;

rest pulse number holding means for holding the pulse number of said user per unit time at a rest time as a rest pulse number;

a pulse number sensor for sensing the pulse number at the time while said user is exercising;

pulse number detecting means for determining the pulse number per unit time, while the user is exercising, in response to the pulse number sensed by said pulse number sensor;

exercise strength operation means for determining the exercise strength while said user is exercising, on the basis of the designated age designated by said age designating means, the rest pulse number held in the rest pulse number holding means, and the pulse number detected by said pulse number detecting means;

exercise strength decision means for deciding whether or not the exercise strength determined by said exercise strength operation means is less than the target exercise strength; and

warning issuing means for issuing a warning in case said exercise strength decision means has decided that the exercise strength is not less than the target exercise strength.

2. An exercise strength evaluation device according to claim 1, wherein said rest pulse number holding means is configured to hold the pulse number of said user detected at the rest time by said pulse number sensor, as the rest pulse number.

3. An exercise strength evaluation device according to claim 1 or claim 2, further comprising: a walk sensor for detecting a walk; and step number counting means for counting the step number detected by the walk sensor.

4. An exercise strength evaluation device according to any one of the preceding claims, further comprising a watch function.

5. An exercise strength evaluation device according to any one of the preceding claims, wherein said evaluation device is worn on a wrist.

# FIG. 1

EP 1 679 097 A1

# FIG. 2

EP 1 679 097 A1

# FIG. 3

START

INPUT AGE, REST PULSE NUMBER, AND TARGET EXERCISE STRENGTH ~H01

H02 AGE < 20 ? — NO

YES

AGE = 20 ~H03

INPUT START BUTTON ~H04

START EXERCISE ~H05

START PULSATION SIGNAL DETECTION ~H06

OPERATE PULSE NUMBER ~H07

CALCULATE PREVAILING EXERCISE STRENGTH ~H08

H09 < TARGET EXERCISE STRENGTH

PREVAILING EXERCISE STRENGTH ?

≧TARGET EXERCISE STRENGTH

WARN ~H10

H11

NO — STOP BUTTON PUSHED ?

YES

END PULSATION SIGNAL DETECTION ~H12

END

# FIG. 4

European Patent
Office

**EUROPEAN SEARCH REPORT**

Application Number

EP 05 25 8120

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/057716 A (KNOWMO, LLC. D.B.A. KNOWLEDGE-IN-MOTION) 25 July 2002 (2002-07-25) * page 40, line 20 - page 41, line 2; claims; figures * | 1-5 | INV. A63B24/00 G01C22/00 |
| X | US 2002/019585 A1 (DICKINSON ELISABETH N) 14 February 2002 (2002-02-14) * the whole document * | 1,2,4,5 | |
| X | EP 1 059 102 A (OMRON CORPORATION; OMRON HEALTHCARE CO., LTD) 13 December 2000 (2000-12-13) * paragraphs [0037], [0038], [0046], [0070], [0071]; claims * | 1,2,4 | |
| X | EP 1 369 082 A (SEIKO EPSON CORPORATION) 10 December 2003 (2003-12-10) * paragraphs [0066], [0068], [0107]; claims * | 1-5 | |
| X | EP 0 842 635 A (SEIKO EPSON CORPORATION) 20 May 1998 (1998-05-20) * column 53, line 55 - column 54, line 4; claims; figures * * column 17, line 35 - column 18, line 25 * * column 3, line 30 - column 4, line 48 * | 1,3-5 | **TECHNICAL FIELDS SEARCHED (IPC)** A63B G01C |
| X | EP 0 809 965 A (SEIKO EPSON CORPORATION) 3 December 1997 (1997-12-03) * page 14, line 54 * * page 15, line 59 * * page 4, line 57 - page 8, line 10; claims; figures * | 1,2,4,5 | |

-/--

The present search report has been drawn up for all claims

| Place of search | Date of completion of the search | Examiner |
|---|---|---|
| The Hague | 19 April 2006 | Knoflacher, N |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   ...............................................................................
& : member of the same patent family, corresponding
   document

EPO FORM 1503 03.82 (P04C01)

EP 1 679 097 A1

**European Patent Office**

**EUROPEAN SEARCH REPORT**

Application Number

EP 05 25 8120

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 135 951 A (RICHARDSON ET AL) 24 October 2000 (2000-10-24) * the whole document * ----- | 1-5 | |
| X | US 6 277 080 B1 (NISSILÄ SEPPO ET AL) 21 August 2001 (2001-08-21) * the whole document * ----- | 1,2,4,5 | |

TECHNICAL FIELDS
SEARCHED     (IPC)

The present search report has been drawn up for all claims

| Place of search | Date of completion of the search | Examiner |
|---|---|---|
| The Hague | 19 April 2006 | Knoflacher, N |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

14

## ANNEX TO THE EUROPEAN SEARCH REPORT
## ON EUROPEAN PATENT APPLICATION NO.

EP 05 25 8120

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2006

| Patent document cited in search report | | Publication date | Patent family member(s) | | Publication date |
|---|---|---|---|---|---|
| WO 02057716 | A | 25-07-2002 | EP | 1352215 A2 | 15-10-2003 |
| | | | JP | 2004533600 T | 04-11-2004 |
| US 2002019585 | A1 | 14-02-2002 | NONE | | |
| EP 1059102 | A | 13-12-2000 | CN | 1291904 A | 18-04-2001 |
| | | | WO | 9943392 A1 | 02-09-1999 |
| | | | JP | 3551924 B2 | 11-08-2004 |
| | | | TW | 474802 B | 01-02-2002 |
| | | | US | 6512948 B1 | 28-01-2003 |
| EP 1369082 | A | 10-12-2003 | JP | 2003265441 A | 24-09-2003 |
| | | | US | 2003176815 A1 | 18-09-2003 |
| EP 0842635 | A | 20-05-1998 | CN | 1194574 A | 30-09-1998 |
| | | | CN | 1589734 A | 09-03-2005 |
| | | | CN | 1545979 A | 17-11-2004 |
| | | | DE | 69725095 D1 | 30-10-2003 |
| | | | DE | 69725095 T2 | 01-04-2004 |
| | | | WO | 9737588 A1 | 16-10-1997 |
| | | | JP | 3608204 B2 | 05-01-2005 |
| | | | US | 6241684 B1 | 05-06-2001 |
| EP 0809965 | A | 03-12-1997 | DE | 69634242 D1 | 03-03-2005 |
| | | | DE | 69634242 T2 | 30-06-2005 |
| | | | WO | 9722295 A1 | 26-06-1997 |
| | | | US | 5941837 A | 24-08-1999 |
| US 6135951 | A | 24-10-2000 | US | 5976083 A | 02-11-1999 |
| US 6277080 | B1 | 21-08-2001 | NONE | | |

EPO FORM P0459

For more details about this annex : see Official Journal of the European Patent Office, No. 12/82